(19) **Europäisches Patentamt European Patent Office Office européen des brevets**

(11) **EP 2 599 982 B1**

(12) **EUROPEAN PATENT SPECIFICATION**

(45) Date of publication and mention
of the grant of the patent:
**27.07.2016 Bulletin 2016/30**

(51) Int Cl.:
*F02C 9/26* *(2006.01)*      *F02C 9/28* *(2006.01)*

(21) Application number: **11191234.1**

(22) Date of filing: **29.11.2011**

(54) **Method of operating an electronic engine control (EEC) to compensate for speed changes**

Verfahren zum Betrieb einer EEC zum Ausgleich von Drehzahländerungen

Procédé de fonctionnement d'une commande moteur électronique (EEC) pour compenser les changements de vitesse

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.06.2013 Bulletin 2013/23**

(73) Proprietor: **Hamilton Sundstrand Corporation Windsor Locks, CT 06096-1010 (US)**

(72) Inventor: **Chapski, David L.
Southwick, MA Massachusetts 01077 (US)**

(74) Representative: **Tomlinson, Kerry John
Dehns
St Bride's House
10 Salisbury Square
London
EC4Y 8JD (GB)**

(56) References cited:
**EP-A2- 0 324 633      EP-A2- 2 184 466
WO-A1-03/023208      US-A1- 2007 175 449**

**Description**

BACKGROUND OF THE INVENTION

Exemplary embodiments pertain to the art of electronic engine controls and, more particularly, to a method of operating an electronic engine control that controls fuel delivery to an engine to compensate for engine rotor speed changes.

Engines, particularly those used to power aircraft, rely on metered flow accuracy provided by a fuel control to provide proper performance. Variations resulting from fuel temperature changes, manufacturing tolerances, calibration/acceptance tests tolerances and the like are included in any accuracy analysis. In a typical fuel control algorithm, an electronic engine control (EEC) schedules fuel flow by establishing an opening of a metering valve (MV) having a flow window. The opening is based on signals from an electrical feedback device. A pressure regulating valve (PRV) is operatively coupled to the metering valve (MV) and is designed to establish a relatively constant pressure differential (delta P) across the flow window. The resulting flow from the metering valve is passed to the engine.

One factor that contributes to metered flow accuracy is maintaining the constant pressure differential (delta P) across the MV. The amount of flow over that which is required by the engine for a given operating condition, or bypass flow, passes across bypass flow windows of the PRV. The amount of bypass flow as well as the pressure drop across the bypass flow window has an impact on a delta P of the MV which then impacts the metered flow through the metering valve. Bypass flow is primarily driven by pump speed which is geared to a rotor of the engine, engine burn flow, pump volumetric displacement and fuel control/actuator (if applicable) internal leakages. The pressure drop across the PRV bypass flow window is primarily driven by engine compressor pressure, engine nozzle drops (which is a function of engine burn flow), and fuel control housing/valve pressure drops. For a specific engine fuel flow, the engine has a range of operating rotor speeds which varies with changing environment conditions such as altitude and engine load requirements such as bleed extraction. Metered flow accuracy is also a consideration when the EEC is operating in an open loop mode such as during start up or when the EEC has flow limits during engine acceleration/deceleration transients. These flow limits protect the engine against surge or flameout events yet also limit the ability for the engine to respond to rapid acceleration/deceleration requests.

US 2007/0175449 discloses a method for controlling fuel flow in a fuel metering system that includes a metering valve, the metering valve being adjusted based on a determined differential pressure error of a bypass valve.

BRIEF DESCRIPTION OF THE INVENTION

In one aspect the invention provides a method of operating an EEC to compensate for rotor speed changes, the method comprising: receiving a fuel flow request, the fuel flow request being computed based on control logic stored in the EEC following a detected engine rotor speed change; sensing actual engine rotor speed; determining a design set point of a fuel MV by retrieving engine design speed and flow constant(s) from a look up table stored in a memory of the EEC; calculating a fuel flow correction factor based on the actual engine rotor speed and the design set point; establishing a final fuel flow request based on the fuel flow correction factor; and adjusting the actual set point of the fuel MV to compensate for the actual engine rotor speed.

In another aspect the invention provides an electronic engine control comprising: an engine speed interface configured to receive a sensed engine rotor speed; a memory; a MV interface configured to control a MV that sets a fuel flow to an engine; and processing circuitry configured and disposed: to receive a fuel flow request, the fuel flow request being computed based on control logic stored in the EEC following a detected engine rotor speed change; to sense actual engine rotor speed; to determine a design set point of the MV by retrieving engine design speed and flow constant(s) from a look up table stowed in the memory of the EEC; to calculate a fuel flow correction factor based on the actual engine rotor speed and the design set point; to establish a final fuel flow request based on the fuel flow correction factor; and to adjust a set point of the MV based on the actual engine rotor speed.

BRIEF DESCRIPTION OF THE DRAWINGS

The following descriptions should not be considered limiting in any way. With reference to the accompanying drawings, like elements are numbered alike:

FIG. 1 is a schematic diagram of an electronic engine control (EEC) operatively connected to an engine in accordance with an exemplary embodiment; and

FIG. 2 depicts a flow chart illustrating a method of adjusting a metering valve to compensate for engine rotor speed changes.

## DETAILED DESCRIPTION OF THE INVENTION

A detailed description of one or more embodiments of the disclosed apparatus and method is presented herein by way of exemplification and not limitation with reference to the Figures.

Increasing performance of engines, particularly those employed in powered flight is of continued concern. One area of current interest is metered fuel flow during open loop conditions such as during engine starting, and during engine transients such as accelerations and decelerations. At present, metering valve (MV) accuracy is a result of a pressure differential ($\Delta P$) of a pressure regulating valve (PRV), which varies over an entire range of the steady state and transient conditions for the engine. The MV flow relative to a position of the MV is based on the $\Delta P$ of the PRV seen during particular engine operating conditions. As such, MV position is often times less than optimal during flight and during start up. Changes in rotor speed which result from engine operating conditions such as at altitude will impact a pressure drop across the MV and thus have a negative effect on fuel flow accuracy and, by extension engine operating performance. Accordingly, exemplary embodiments provide a method and engine control that adjusts MV position to control fuel flow to an engine based on engine rotor speed changes as will be discussed more fully below.

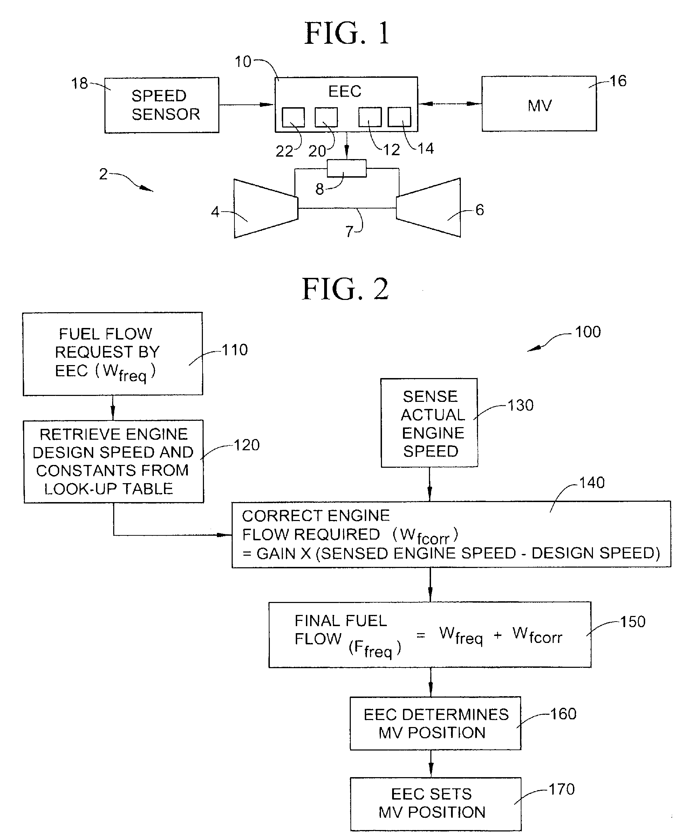

With reference to FIG. 1, an engine, depicted as a gas turbine engine, is generally indicated at 2. Gas turbine engine 2 includes a compressor section 4 that is operatively connected to a turbine section 6 via a common compressor turbine shaft 7. The compressor section 4, turbine section 6, and shaft 7 may include multiple stages and components to support multiple spools, such as low pressure and high pressure spools. Compressor section 4 is also fluidly connected to turbine section 6 via a combustor 8. Combustor 8 delivers fuel to be mixed with air from compressor section 4 and is combusted to form combustion gases. The combustion gases are delivered to turbine section 6. Turbine section 6 converts thermal and kinetic energy from the combustion gases to mechanical rotation energy that is used for powered flight. An electronic engine control (EEC) 10 including processing circuitry 12 and memory 14 controls fuel delivery to combustor 8. EEC 10 is operatively connected to a metering valve (MV) 16 that controls fuel delivery to combustor 8, and a speed sensor 18 that detects a rotor speed of engine 2. More specifically, EEC 10 controls a set point of MV 16 to establish a desired fuel burn flow rate to combustor 8.

Processing circuitry 12 may include any combination of processing circuits known in the art, such as one or more microprocessors, microcontrollers, digital signal processors, and/or programmable logic devices. The memory 14 can store executable instructions and data to implement control laws of the EEC 10. EEC 10 also includes an engine rotor speed interface 20, and a metering valve interface 22. The engine rotor speed interface 20 converts data from the rotor speed sensor 18 into a format usable by the processing circuitry 12, for instance, a frequency-to-digital converter. It will be understood that the rotor speed sensor 18 need not directly provide engine rotor speed data but may indirectly provide engine speed data, such as an alternator/generator output frequency through a gearbox (not depicted) coupled to the gas turbine engine rotor 6. Metering valve interface 22 converts data from metering valve 16 into a format usable by processing circuitry 12 that provides an indication of metering valve position and also provides a pathway for EEC 10 to set a new valve opening for MV 16.

Reference will now be made to FIG. 2 in describing a method 100 of adjusting a set point of MV 16 to compensate for changes in rotor speed of engine 2. Following an engine rotor speed change, a fuel flow request ($W_{freq}$) is computed based on control logic stored in EEC 10 as indicated in block 110. At this point EEC 10 retrieves engine design speed and flow constant(s) (gain) from a look up table stored in memory 14 in block 120. The flow constant or gain is a slope of a fuel flow change curve for a given change in engine rotor speed. The flow constant or gain is, in accordance with one aspect of the exemplary embodiment based on a nominal fuel control. EEC 10 also receives a rotor speed signal from engine rotor speed sensor 18 as indicated in block 130. The speed signal represents the actual rotor speed of engine 2. EEC 10 then employs the engine design speed and flow constant to determine a fuel flow correction factor ($W_{fcorr}$) in block 140. The fuel flow correction factor is used to determine an actual or final fuel flow required ($F_{freq}$) for engine 2 as indicated in block 150. The fuel flow correction factor and final fuel flow required are, in accordance with one aspect of the exemplary embodiment, based upon the following equations. Of course, it should be understood that other equations could also be employed.

$$W_{fcorr} = Gain * (sensed\ engine\ speed - design\ speed)$$

$$Final\ Flow\ Required\ (F_{freq}) = W_{freq} + W_{fcorr}$$

After establishing the final flow required, EEC 10 determines a position of MV 16 to meet the required fuel flow as indicated in block 160 and then sets the position of MV 16 as indicated in block 170.

At this point it should be understood that the exemplary embodiments provide a system that adjusts fuel delivery in an engine to compensate for rotor speed changes. Compensating for rotor speed changes enhances accuracy of fuel flow and expands an overall operational envelope of the engine. That is, the supplied fuel flow is tailored to an actual speed rather than being based on look up tables based on steady state conditions.

While the invention has been described with reference to an exemplary embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

## Claims

1.  A method of operating an electronic engine control (EEC) (10) to compensate for rotor speed changes, the method comprising:

    receiving (110) a fuel flow request, the fuel flow request being computed based on control logic stored in the EEC following a detected engine rotor speed change;
    sensing (130) actual engine rotor speed;
    determining a design set point of a fuel metering valve (MV) by retrieving engine design speed and flow constant(s) from a look up table stored in a memory (14) of the EEC;
    calculating (140) a fuel flow correction factor based on the actual engine rotor speed and the design set point;
    establishing (150) a final fuel flow request based on the fuel flow correction factor; and
    adjusting (160) the actual set point of the fuel metering valve (MV) (16) to compensate for the actual engine rotor speed.

2.  The method of claim 1, wherein determining the design set point includes retrieving the design set point stored in a look up table.

3.  The method of claim 1 or 2, wherein sensing engine rotor speed includes sensing rotor speed of a gas turbine engine.

4.  The method of claim 3, wherein sensing rotor speed of a gas turbine engine includes sensing rotor speed of a gas turbine engine during flight.

5.  An electronic engine control (EEC) comprising:

    an engine speed interface (20) configured to receive a sensed engine rotor speed;
    a memory (14);
    a metering valve (MV) interface (22) configured to control a MV (16) that sets a fuel flow to an engine (2); and
    processing circuitry (12) configured and disposed:

        to receive a fuel flow request, the fuel flow request being computed based on control logic stored in the EEC following a detected engine rotor speed change;
        to sense actual engine rotor speed;
        to determine a design set point of the metering valve (MV) by retrieving engine design speed and flow constant(s) from a look up table stowed in the memory of the EEC;
        to calculate a fuel flow correction factor based on the actual engine rotor speed and the design set point;
        to establish a final fuel flow request based on the fuel flow correction factor; and
        to adjust a set point of the MV based on the actual engine rotor speed.

## Patentansprüche

1.  Verfahren zum Betrieb einer elektronischen Triebwerkssteuerung (EEC) (10) zum Ausgleich von Drehzahländerungen, wobei das Verfahren umfasst:

    Empfangen (110) einer Kraftstoffdurchsatzanfrage, wobei die Kraftstoffdurchsatzanfrage im Anschluss an eine detektierte Triebwerksrotordrehzahländerung auf Grundlage von in der EEC gespeicherter Steuerlogik berechnet wird;

Abtasten (130) einer tatsächlichen Triebwerksrotordrehzahl;

Bestimmen eines Nennsollwertes eines Kraftstoffdosierventils (MV) durch Abrufen von Triebwerksnenndrehzahl und Durchsatzkonstante(n) von einer Wertetabelle, welche in einem Speicher (14) der EEC gespeichert ist;

Berechnen (140) eines Kraftstoffdurchsatzberichtigungsfaktors auf Grundlage der tatsächlichen Triebwerksrotordrehzahl und des Nennsollwertes;

Erstellen (150) einer finalen Kraftstoffdurchsatzanfrage auf Grundlage des Kraftstoffdurchsatzberichtigungsfaktors; und

Anpassen (160) des tatsächlichen Sollwertes des Kraftstoffdosierventils (MV) (16) zum Ausgleich der tatsächlichen Triebwerksrotordrehzahl.

2. Verfahren nach Anspruch 1, wobei das Bestimmen des Nennsollwertes das Abrufen des in einer Wertetabelle gespeicherten Nennsollwertes enthält.

3. Verfahren nach Anspruch 1 oder 2, wobei das Abtasten der Triebwerksrotordrehzahl das Abtasten der Rotordrehzahl eines Gasturbinentriebwerkes enthält.

4. Verfahren nach Anspruch 3, wobei das Abtasten der Rotordrehzahl eines Gasturbinentriebwerkes das Abtasten der Rotordrehzahl eines Gasturbinentriebwerkes während des Fluges enthält.

5. Triebwerkssteuerung (EEC), umfassend:

eine Triebwerksdrehzahlschnittstelle (20), welche zum Empfangen einer abgetasteten Triebwerksrotordrehzahl ausgelegt ist;

einen Speicher (14);

eine Dosierventil- (MV) Schnittstelle (22), ausgelegt zum Steuern eines MV (16), welches den Kraftstoffdurchsatz zu einem Triebwerk (2) festsetzt; und

Verarbeitungsschaltungen (12), die für Folgendes ausgelegt und angeordnet sind:

zum Empfangen einer Kraftstoffdurchsatzanfrage, wobei die Kraftstoffdurchsatzanfrage im Anschluss an eine detektierte Triebwerksrotordrehzahländerung auf Grundlage von in der EEC gespeicherter Steuerlogik berechnet wird;

zum Abtasten einer tatsächlichen Triebwerksrotordrehzahl;

zum Bestimmen eines Nennsollwertes eines Kraftstoffdosierventils (MV) durch Abrufen von Triebwerksnenndrehzahl und Durchsatzkonstante(n) von einer Wertetabelle, welche in dem Speicher der EEC gespeichert ist;

zum Berechnen eines Kraftstoffdurchsatzberichtigungsfaktors auf Grundlage der tatsächlichen Triebwerksrotordrehzahl und des Nennsollwertes;

zum Erstellen einer finalen Kraftstoffdurchsatzanfrage auf Grundlage des Kraftstoffdurchsatzberichtigungsfaktors; und

zum Anpassen eines Sollwertes des MV auf Grundlage der tatsächlichen Triebwerksrotordrehzahl.

**Revendications**

1. Procédé de fonctionnement d'une commande moteur électronique (EEC) (10) pour compenser les changements de vitesse de rotor, le procédé comprenant :

la réception (110) d'une demande de débit de carburant, la demande de débit de carburant étant calculée sur la base d'une logique de commande stockée dans l'EEC à la suite d'un changement de vitesse de rotor de moteur détecté ;

la détection (130) d'une vitesse de rotor de moteur réelle ;

la détermination d'une valeur de consigne de conception d'un doseur de carburant (MV) en recherchant la vitesse de conception du moteur et la ou les constantes de débit dans un tableau de recherche stocké dans une mémoire (14) de l'EEC ;

le calcul (140) d'un facteur de correction de débit de carburant sur la base de la vitesse de rotor de moteur réelle et de la valeur de consigne de conception ;

l'établissement (150) d'une demande de débit de carburant finale sur la base du facteur de correction de débit de carburant ; et

le réglage (160) de la valeur de consigne réelle du doseur de carburant (MV) (16) pour compenser la vitesse de rotor de moteur réelle.

2. Procédé selon la revendication 1, dans lequel la détermination de la valeur de consigne de conception comprend la recherche de la valeur de consigne de conception stockée dans un tableau de recherche.

3. Procédé selon la revendication 1 ou 2, dans lequel la détection de la vitesse de rotor de moteur comprend la détection de la vitesse de rotor d'un moteur à turbine à gaz.

4. Procédé selon la revendication 3, dans lequel la détection de la vitesse de rotor d'un moteur à turbine à gaz comprend la détection de la vitesse de rotor d'un moteur à turbine à gaz en vol.

5. Commande moteur électronique (EEC) comprenant :

une interface (20) de vitesse de moteur conçue pour recevoir une vitesse de rotor de moteur détectée ;

une mémoire (14) ;

une interface de doseur de carburant (MV) (22) conçue pour commander un MV (16) qui définit un débit de carburant alimentant un moteur (2) ; et

un circuit de traitement (12) conçu et disposé :

pour recevoir une demande de débit de carburant, la demande de débit de carburant étant calculée sur la base d'une logique de commande stockée dans l'EEC à la suite d'un changement de vitesse de rotor de moteur détecté ;

pour détecter une vitesse de rotor de moteur réelle ;

pour déterminer une valeur de consigne de conception du doseur de carburant (MV) en recherchant la vitesse de conception du moteur et la ou les constantes de débit dans un tableau de recherche stocké dans la mémoire de l'EEC ;

pour calculer un facteur de correction de débit de carburant sur la base de la vitesse de rotor de moteur réelle et de la valeur de consigne de conception ;

pour établir une demande de débit de carburant finale sur la base du facteur de correction de débit de carburant ; et

pour régler une valeur de consigne du MV sur la base de la vitesse de rotor de moteur réelle.

# FIG. 1

```
18          10                          16
SPEED          EEC                  MV
SENSOR

      22  20      12  14
 2
              8
        4              6

              7
```

# FIG. 2

```
                                        100
FUEL FLOW
REQUEST BY          110
EEC (W_freq)
                              SENSE
                              ACTUAL      130
                              ENGINE
                              SPEED
RETRIEVE ENGINE
DESIGN SPEED AND    120
CONSTANTS FROM                                              140
LOOK-UP TABLE
                         CORRECT ENGINE
                         FLOW REQUIRED  (W_fcorr)
                         = GAIN X (SENSED ENGINE SPEED - DESIGN SPEED)


                         FINAL FUEL
                         FLOW (F_freq)  =  W_freq  +  W_fcorr      150


                         EEC DETERMINES      160
                         MV POSITION


                         EEC SETS            170
                         MV POSITION
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070175449 A